# EUROPÄISCHE PATENTSCHRIFT

(11) **EP 0 924 832 B1**
(45) Veröffentlichungstag und Bekanntmachung des Hinweises auf die Patenterteilung: **31.07.2002**
(21) Anmeldenummer: 98250439.1
(22) Anmeldetag: 17.12.1998
(51) Int. Cl.: H02G 9/10, G02B 6/44

(54) **Verfahren und Vorrichtung zum Anbringen von Kabeln und Kabelmuffen in Schachtanlagen**
Process and device for fastening cables and cable sleeves in manhole installations
Procédé et dispositif de fixation de câbles et manchons de câble dans des installations à regard

(30) Priorität: 22.12.1997 DE 19758362
(43) Veröffentlichungstag der Anmeldung: 23.06.1999
(73) Patentinhaber: Berliner Wasserbetriebe Anstalt des öffentlichen Rechts, 10179 Berlin (DE)
(72) Erfinder: Gaebelein, Wilhelm, Dr.-Ing., 14163 Berlin (DE); Adams, Manfred, 12347 Berlin (DE)

(56) Entgegenhaltungen:
- EP-A- 0 725 468
- WO-A-97/26574
- DE-C- 572 076
- US-A- 4 709 980
- US-A- 5 270 489

## Beschreibung

Die Erfindung betrifft ein Verfahren und eine Haltevorrichtung zum Anbringen von Kabeln und Kabelmuffen in Schachtanlagen, insbesondere in Einsteigschächten von Entwässerungskanälen, die als Kabeltrasse für Kabel, beispielsweise Lichtwellenleiter (LWL)-Kabel, genutzt werden.

Für das Anbringen von Kabeln, wie beispielsweise LWL-Kabeln und den dazugehörigen Muffen, werden neben separaten Schutzrohren zunehmend die Rohre der Entwässerungsnetze genutzt. Der Anschluss der Kunden an das Kommunikationsnetz erfolgt über Muffen, die in den Schächten der Entwässerungsanlagen untergebracht sind. Das Einbinden der Muffen in die Kabelstränge zum Zweck des Verbindens von Kabelenden oder zum Zweck des Anschlusses von Kunden erfolgt aus Gründen des Arbeitsschutzes und teilweise vorhandener explosiver Gase nur außerhalb der Schachtanlagen. Deshalb ist es erforderlich, im Schacht Kabelmaterial vorzuhalten. Problematisch ist die sichere Unterbringung des Kabelmaterials und der Muffen mit minimaler Verringerung des Arbeitsraumes im Schacht.

Die Druckschrift DE-C-572 076 beschreibt das Aufhängen von Kabeln in Kabelschächten in an Spannstangen befestigten Kabeltragschellen. Die Spannstangen sind auf beiden Seiten der Schächte angeordnet und in der Höhe verschiebbar zwischen den Wänden verspannt. Die Vorrichtung ist nur für rechteckige Schächte mit senkrechten Wänden geeignet.

Die Veröffentlichung US-A-4 709 980, welche als nächstliegender Stand der Technik anzusehen ist, beschreibt einen aus mehreren Teilen bestehenden speziell auf die Unterbringung einer Kabelverbindungsmuffe angelegten schachtförmig ausgebildeten Behälter aus Stahlbeton mit um 180° versetzt angeordneten tangential ausgebildeten Eintrittsöffnungen für die Einführung jeweils eines Kabels. Die zwei aus unterschiedlichen Richtungen ankommenden Kabel werden im Schacht tangential geführt und in gleichen Abständen mittels Bändern zusammengefasst. Diese Einheit wird in mehreren Windungen unter Berücksichtigung des Mindestkrümmungsradius in den oberen Zylinder geführt und in eine Kabelmuffe eingebunden.
Nachteilig hierbei ist, dass die Kabelringe, bestehend aus beiden Kabeln, lose, ungesichert und unkontrolliert im unteren Teil des Behälters liegen. Die tangentiale Einführung des Kabels lässt sich in Schachtanlagen, insbesondere in Entwässerungsschächten, nicht durchführen. Ein loses Aufliegen der Kabelringe auf dem Schachtboden führt zur Beeinträchtigung des Betriebes der Kanäle und der Schachtanlagen bei der Ableitung von Abwasser sowie bei der Wartung aufgrund der Reduzierung des betretbaren Raumes. Auch wird das lose am Boden liegende Kabel beim Betreten des Schachtes und beim Einführen von Geräten zur Inspektion und Reinigung der Kanäle beschädigt.

Aufgabe der Erfindung ist es, ein Verfahren und eine Haltevorrichtung anzugeben, um eine platzsparende und sichere Unterbringung von Kabeln und Kabelmuffen in Schachtanlagen an der Innenwand des Schachtes zu gewährleisten.

Erfindungsgemäß wird die Aufgabe durch ein Verfahren gemäß Anspruch 2 und eine Haltevorrichtung gemäß Anspruch 4 gelöst.

Das Kabel wird mit oder ohne die Kabelmuffe versehen, nach unten in Richtung des Schachtbodens unter Bildung von kreisförmigen Kabelwindungen in den Schacht zurückgeführt, wobei die Kabelwindungen in an der Schachtinnenwand, vorzugsweise im rückstaufreien Bereich oberhalb des Rohrscheitels von in den Schacht ein- und ausmündenden Kanalrohren, befestigte, am Schachtinnenumfang verteilte Halteelemente übereinander eingelegt werden.
Die Kabelmuffe wird fest oder lose im oberen Bereich des Schachtes, bei Einsteigschächten mit Konus, vorzugsweise außerhalb des Konusbereiches, angeordnet. Die in die Kabelmuffe eingebundenen Kabel werden dicht an der Innenwand des Schachtes geführt. Dadurch wird der Schachtquerschnitt als Arbeitsraum nur unwesentlich eingeengt. Bei Verzicht auf Kabelmuffen wird das Kabel in der gesamten Länge in die Halteelemente übereinander eingelegt.
In dauerhaft überstauten Kanälen werden die Kabelringe und Kabelmuffen vorzugsweise oberhalb der Überstauebene angebracht.

Die erfindungsgemäße Haltevorrichtung zur Durchführung des Verfahrens besteht aus Halteelementen zur Aufnahme und Ablage des Kabels und zum Befestigen an der Schachtinnenwand. Diese sind aus korrosionsbeständigem Material mit einem hohen Widerstandsmoment und u- oder z-förmig ausgebildet, wobei sich die Länge der Halteelemente nach der Anzahl der Kabelwindungen richtet. Diese können auch als umlaufender geschlossener und mit Öffnungen versehener Ring oder segmentförmig ausgebildet sein. Die Halteelemente sind mit einer Vorrichtung zum Schutz des Kabels gegen mechanische Einwirkungen beim Absenken von Arbeitsmaterialien, beispielsweise von einer Fernsehkamera oder einer Schlauchdüse, versehen. Die Schutzvorrichtung ist unmittelbar über den Halteelementen angeordnet und entweder direkt oder zusammen mit den Halteelementen an der Innenwand des Schachtes befestigt. Diese ist als umlaufende Dachkonstruktion oder in Form zusammengesetzter Segmente, rechtwinklig oder geneigt, vorzugsweise versehen mit leichtem Gefälle zur Schachtmitte hin, ausgebildet. Eine weitere Ausgestaltung der erfindungsgemäßen Vorrichtung sieht vor, dass die Halteelemente und die Schutzvorrichtung aus einem Bauteil bestehen.
Die Durchführung der Kabel in Richtung Kabelmuffe erfolgt über Öffnungen in der Dachkonstruktion.

Die Erfindung soll nachstehend an einem Ausführungsbeispiel näher erläutert werden.

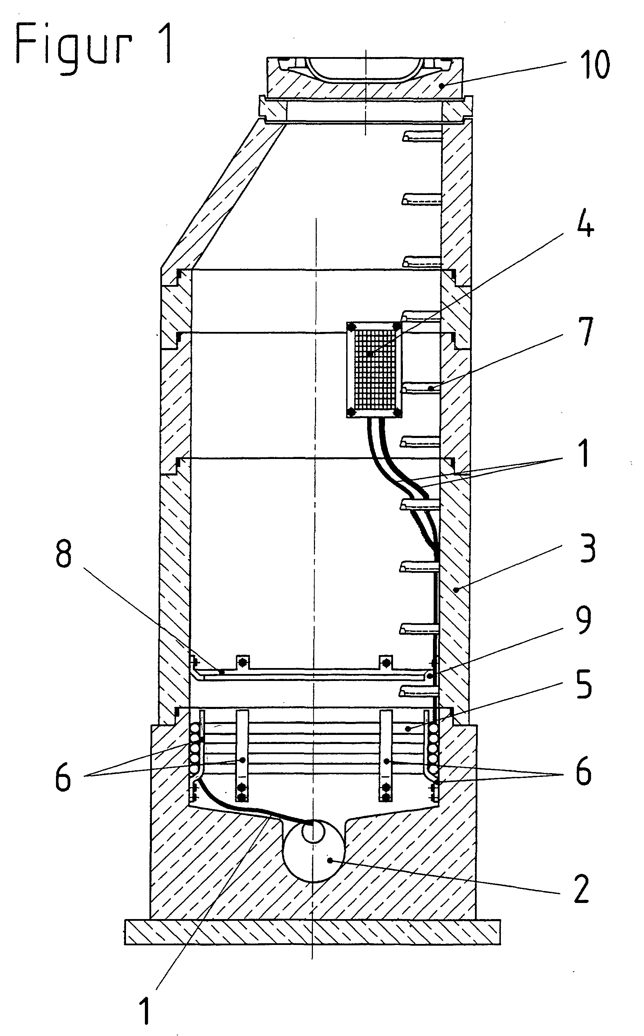

Die zugehörenden Zeichnungen zeigen
- Fig. 1 -: den vertikalen Schnitt durch einen Einsteigschacht mit in den Halteelementen eingelegtem LWL-Kabel und neben den Steigeisen befestigten Kabelmuffe.

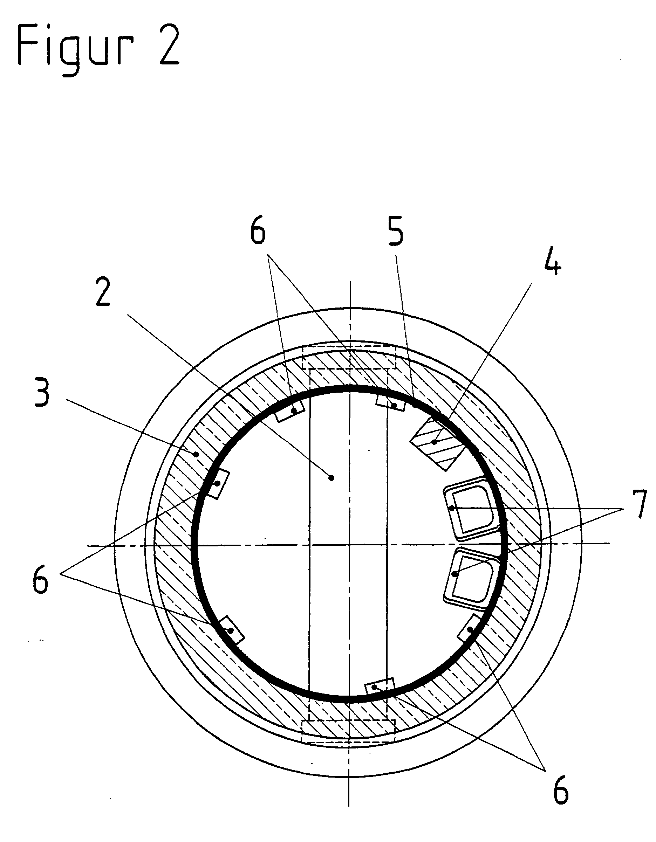

- Fig. 2 -: die Draufsicht eines Einsteigschachtes mit Lage des LWL-Kabels, der Halteelemente sowie der Steigeisen und der Kabelmuffe.

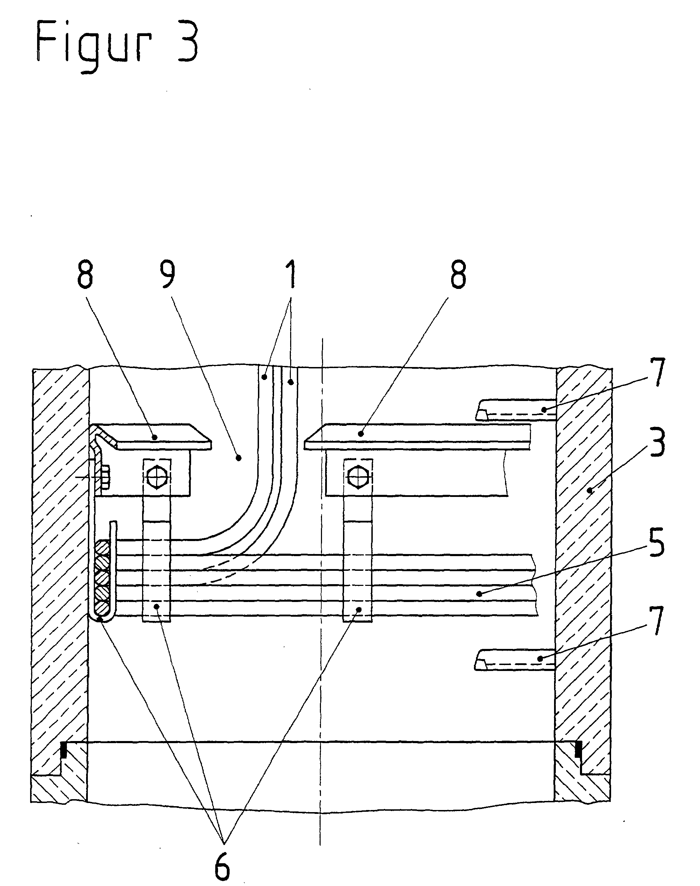

- Fig. 3-: die Halteelemente zur Aufnahme und Ablage des LWL-Kabels und die Schutzvorrichtung.

Ein LWL-Kabel 1 wird aus dem Kanal 2 unter Berücksichtigung des Mindestbiegeradius des verwendeten LWL-Kabels 1 über den Einsteigschacht 3 als Kabelschlaufe oder Kabelenden mit einer Länge von ungefähr 7,5 m herausgezogen. Die Kabelmuffe 4 wird in das LWL-Kabel 1 eingefügt. Das LWL-Kabel 1 mit der Kabelmuffe 4 wird unter Bildung von kreisförmigen Kabelringen 5 in den Einsteigschacht 3 zurückgeführt und die Kabelringe in die gleichmäßig über den Umfang des Einsteigschachtes 3 verteilten Halteelemente 6 übereinander eingelegt. Die Kabelmuffe 4 wird neben dem Steigeisen 7 an der Innenwand des Schachtes 3 befestigt. Die in die Kabelmuffe 4 eingebundenen LWL-Kabel 1 werden dicht an der Innenwand des Schachtes 3 geführt. Über den Halteelementen 6 ist eine Dachkonstruktion 8 mit leichtem Gefälle zur Schachtmitte hin angeordnet, und an der Innenwand des Schachtes 3 befestigt. Das LWL-Kabel 1 wird in Richtung Kabelmuffe 4 durch eine Kabelöffnung 9 geführt.

## Patentansprüche

1. Verfahren zum Anbringen von Kabeln und Kabelmuffen in Schachtanlagen, insbesondere in Einsteigschächten von Entwässerungskanälen,
**dadurch gekennzeichnet, dass**
das Kabel (1) in der benötigten Länge über die Innenwand des Schachtes (3) als Schlaufe oder Kabelenden nach oben hinausgeführt und, mit oder ohne die Kabelmuffe (4) versehen, nach unten in Richtung des Schachtbodens unter Bildung von kreisförmigen Kabelwindungen (5) in den Schacht (3) zurückgeführt wird, wobei die Kabelwindungen (5) in an der Schachtinnenwand, vorzugsweise im rückstaufreien Bereich oberhalb des Rohrscheitels von in den Schacht (3) ein- und ausmündenden Kanalrohren (2), befestigte, am Schachtinnenwandumfang verteilte Halteelemente (6) übereinander eingelegt werden.

2. Verfahren nach dem Anspruch 1,
**dadurch gekennzeichnet, dass**
die Kabelmuffe (4) lose oder fest im oberen Bereich des Schachtes (3), vorzugsweise außerhalb des Konusbereiches, angeordnet wird.

3. Verfahren nach den Ansprüchen 1 und 2,
**dadurch gekennzeichnet, dass**
die in die Kabelmuffe (4) eingebundenen Kabel (1) dicht an der Innenwand des Schachtes (3) geführt werden.

4. Haltevorrichtung zur Durchführung des Verfahrens nach dem Anspruch 1,
**dadurch gekennzeichnet, dass** die Haltevorrichtung aus korrosionsbeständigem Material mit einem hohen Widerstandsmoment bestehende und u- oder z-förmig ausgebildete
Halteelemente (6) zur Aufnahme und Ablage eines Kabels (1) und zum Befestigen an einer Schachtinnenwand aufweist, wobei sich die Länge der Halteelemente nach der Anzahl der Kabelwindungen (5) richtet.

5. Haltevorrichtung nach dem Anspruch 4,
**dadurch gekennzeichnet, dass**
die Halteelemente (6) als umlaufender geschlossener und mit Öffnungen versehener Ring oder segmentförmig ausgebildet sind.

6. Haltevorrichtung nach den Ansprüchen 4 und 5,
**dadurch gekennzeichnet, dass**
über den Halteelementen (6) eine Schutzvorrichtung (8), die als umlaufende Dachkonstruktion oder in Form zusammengesetzter Segmente rechtwinklig oder geneigt, vorzugsweise versehen mit leichtem Gefälle zur Schachtmitte hin, und entweder direkt oder zusammen mit den Halteelementen (6) an der Innenwand des Schachtes (3) befestigt, angeordnet ist.

7. Haltevorrichtung nach den Ansprüchen 4 bis 6,
**dadurch gekennzeichnet, dass**
die Halteelemente (6) und die Schutzvorrichtung (8) als ein Bauteil ausgebildet sind.

8. Haltevorrichtung nach den Ansprüchen 4 bis 7,
**dadurch gekennzeichnet, dass**
die Schutzvorrichtung (8) mit Öffnungen (9) versehen ist.

## Claims

1. Method of mounting cables and cable sleeves in shaft installations, especially in manholes of sewerage channels, **characterised in that** the cable (1) in the requisite length is led out from above over the inner wall of the shaft (3) as a loop or cable ends and, provided or not provided with the cable sleeve (4), led back down in the direction of the shaft base with formation of circular cable coils (5) in the shaft (3), wherein the cable coils (5) are laid one above the other in mounting elements (6) distributed at the shaft inner wall circumference and fastened at the shaft inner wall, preferably in the region, which is free of build-up, above the pipe crest of sewer pipes (2) opening into and discharging from the shaft (3).

2. Method according to claim 1, **characterised in that** the cable sleeve (5) is arranged loosely or fixedly in the upper region of the shaft (3), preferably outside the cone region.

3. Method according to claims 1 and 2, **characterised in that** the cable (1) engaged in the cable sleeve (4) is guided closely against the inner wall of the shaft (3).

4. Mounting device for carrying out the method according to claim 1, **characterised in that** the mounting device consists of corrosion-resistant material with a high moment of resistance and comprises mounting elements (6), which are constructed to be U-shaped or Z-shaped, for receiving and supporting a cable (1) and for fastening to a shaft inner wall, wherein the length of the mounting elements is oriented to the number of cable coils (5).

5. Mounting device according to claim 4, **characterised in that** the mounting elements (6) are constructed as a ring, which is closed all round and provided with openings, or to be segment-shaped.

6. Mounting device according to claims 4 and 5, **characterised in that** a protective device (8), which is right-angled or inclined as an encircling roof construction or in the form of segments joined together, preferably provided with a slight drop towards the shaft centre, and fastened either directly or together with the mounting elements (6) to the inner wall of the shaft (3), is arranged above the mounting elements (6).

7. Mounting device according to claims 4 to 6, **characterised in that** the mounting elements (6) and the protective device (8) are constructed as one component.

8. Mounting device according to claims 4 to 7, **characterised in that** the protective device (8) is provided with openings (9).

## Revendications

1. Procédé de fixation de câbles et de manchons de câbles dans des installations à regard, en particulier dans des puits de visite de canaux de drainage des eaux,
**caractérisé en ce que**
le câble (1) est guidé vers le haut dans la longueur voulue sur la paroi interne du puits (3) en tant que boucle ou qu'extrémités de câbles et est ramené dans le puits (3), muni ou non de manchon de câbles (4) vers le bas en direction du fond du puits en formant des enroulements de câble (5) circulaires, les enroulements de câble (5) étant insérés l'un sur l'autre dans des éléments de fixation (6) répartis sur le pourtour de la paroi interne du puits et fixés sur la paroi interne du puits, de préférence dans la zone à l'abri de l'eau au-dessus du sommet de conduite des conduites des canaux (2) qui débouchent et qui partent du puits (3).

2. Procédé selon la revendication 1,
**caractérisé en ce que**
le manchon de câbles (4) est disposé de façon mobile ou fixe dans la zone supérieure du puits (3), de préférence en dehors de la zone de cône.

3. Procédé selon la revendication 1 ou 2
**caractérisé en ce que**
les câbles (1) engagés dans le manchon de câbles (4) sont guidés contre la paroi intérieure du puits (3).

4. Dispositif de fixation pour réaliser le procédé selon la revendication 1,
**caractérisé en ce que**
le dispositif de fixation présente des éléments de fixation (6) pour recevoir et pour retirer un câble (1) et destinés à la fixation sur une paroi interne de puits, lesquels éléments sont réalisés en un matériau résistant à la corrosion dont le moment de résistance est élevé et ont une forme de " u " ou de " z ", la longueur des éléments de fixation étant fonction du nombre des enroulements de câble (5).

5. Dispositif de fixation selon la revendication 4,
**caractérisé en ce que**
les éléments de fixation (6) sont formés en tant qu'anneau tournant fermé et muni d'ouvertures ou qu'ils sont réalisés sous forme de segments.

6. Dispositif de fixation selon les revendications 4 et 5,
**caractérisé en ce que**
au dessus des éléments de fixation (6) est placé un dispositif de protection (8) qui, en tant que construction circulaire en toit ou sous forme de segments assemblés, est orthogonal ou incliné, qui est de préférence muni d'une légère déclivité par rapport au milieu du puits, et qui est fixé sur la paroi interne du puits (3) soit directement soit ensemble avec les éléments de fixation (6).

7. Dispositif de fixation selon les revendications 4 à 6,
**caractérisé en ce que**
les éléments de fixation (6) et le dispositif de protection (8) forment un élément structurel.

8. Dispositif de fixation selon les revendications 4 à 7,
**caractérisé en ce que**
le dispositif de protection (8) est muni d'ouvertures (9).
